# EUROPEAN PATENT APPLICATION

(11) **EP 4 607 262 A1**
(43) Date of publication of application: **27.08.2025**
(21) Application number: 23884896.4
(22) Date of filing: 31.10.2023
(51) Int. Cl.: G02B 27/01, G09F 9/30, B32B 17/10, B60J 1/00

(54) **LUMINESCENT DISPLAY GLASS AND VEHICLE**

(30) Priority: 01.11.2022 CN 202211353102
(71) Applicant: Fuyao Glass Industry Group Co., Ltd., Fuqing, Fujian 350300 (CN)
(72) Inventor: LIU, Yu, Fuzhou, Fujian 350300 (CN); LIN, Shou, Fuzhou, Fujian 350300 (CN); CHEN, Hongwei, Fuzhou, Fujian 350300 (CN); ZHENG, Jiansen, Fuzhou, Fujian 350300 (CN)
(74) Representative: Patentanwälte Olbricht Buchhold Keulertz
(86) International application number: PCT/CN2023/128168
(87) International publication number: WO 2024/093966

(57) **Abstract**

A luminescent display glass and a vehicle. The luminescent display glass includes a glass layer (1), a substrate layer (2) and a luminescent display layer (3) which are arranged in a stacked manner. At least part of the substrate layer (2) is located at a position of junction between the luminescent display layer (3) and the glass layer (1), so as to make a transition between a display effect of the luminescent display layer (3) and a display effect of the glass layer (1), and eliminate a visual difference between the luminescent display layer (3) and the glass layer (1) at the position of junction. The technical problem of the poor integration effect between the luminescent display device and the glass is solved.

## Description

### CROSS-REFERENCE TO RELATED APPLICATIONS

The present disclosure claims priority to Chinese Invention Patent Application No. 202211353102.2, entitled "luminescent display glass and vehicle", and filed on November 1, 2022.

### TECHNICAL FIELD

The present disclosure relates to the field of vehicles, and particularly to a luminescent display glass and a vehicle.

### BACKGROUND

With the intelligent and functional development of vehicle glass, intelligent display glass has gradually become a growth point of the automobile industry and one of the key research focuses in vehicle engineering. The intelligent display glass is categorized into two types: passive light-emitting type and active light-emitting type. The passive light-emitting intelligent display glass includes projection PDLC (Polymer Dispersed Liquid Crystal) glass, HUD (Head-Up Display) glass, etc. One of the primary technical approaches for active luminescent intelligent display glass involves integrating a traditional display into transparent glass to create active luminescent display components.

Currently, mainstream display technologies are mainly categorized as liquid crystal displays (LCD), organic light-emitting diode displays (OLED) and inorganic light-emitting diode displays (LED). Due to limitations in cutting yield and electronic control system design, most displays are square or near-square in shape (e.g., aspect ratios of 16:10, 16:9, 4:3, 3:2, or the like). In addition, technological limitations prevent luminescent display devices from achieving full transparency or optical properties identical to glass. Consequently, when integrating such luminescent display devices into glasses, significant optical differences in color, light transmittance, haze, and other properties emerge between the functional display area and its surrounding regions. In the field of vehicle glass, design requirements for aerodynamics and aesthetics often result in irregularly shapes, such as doubly curved surfaces with rounded corners, triangular forms, or polygonal configurations. Therefore, when the luminescent display device is integrated into the vehicle glass, the combination of the irregular-shaped vehicle glass and the square display device may cause a strong contrast between the opaque or semitransparent square display functional area and the remaining fully transparent irregular-shaped substrate area, which not only degrades display performance of the display device, but also delivers a poor aesthetic and visual impression to users, severely limiting the adoption of transparent display glass in automotive applications.

There is no effective solution to the problem of poor integration of the luminescent display device with the glass in the related art.

### SUMMARY

The present disclosure aims to provide a luminescent display glass and a vehicle. The luminescent display device exhibits enhanced compatibility with the glass, and can provide a larger design space for luminescent display content while achieving superior display performance, thereby bringing a better aesthetic impression to users.

The present disclosure can be realized by adopting the following technical solutions.

The present disclosure provides a luminescent display glass, including a glass layer, a substrate layer and a luminescent display layer which are arranged in a stacked manner. At least part of the substrate layer is located at a position of junction between the luminescent display layer and the glass layer, so as to make a transition between a display effect of the luminescent display layer and a display effect of the glass layer, and eliminate a visual difference between the luminescent display layer and the glass layer at the position of junction.

The present disclosure provides a vehicle, including a vehicle body and the aforementioned luminescent display glass. The luminescent display glass is disposed on the vehicle body.

The present disclosure has the following advantageous effects:
1. In the luminescent display glass, the substrate layer is added on the basis of the luminescent display layer and the glass layer. The substrate layer is stacked with the luminescent display layer and the glass layer, and at least part of the substrate layer is located at a position of junction between the luminescent display layer and the glass layer. The display effect of the luminescent display layer and the display effect of the glass layer is transitioned through the substrate layer, so that the luminescent display layer and the glass layer can be visually transitionally integrated, thereby effectively eliminating the visual difference between the luminescent display layer and the glass layer at the position of junction, and improving the compatibility between the luminescent display layer and the glass layer. In addition to achieving superior display performance, the substrate layer can provide a larger design space for the luminescent display content and bring a better aesthetic impression to users.
2. In the luminescent display glass, there are fewer restrictions on the substrate area in the substrate layer, thus granting designers more design freedom, and improving the aesthetic appearance of the glass display.

### BRIEF DESCRIPTION OF THE DRAWINGS

The following drawings are intended only to schematically illustrate and explain the present disclosure, and do not limit the scope of the present disclosure. In the drawings:
FIG. 1 illustrates a first cross-sectional view of a luminescent display glass of the present disclosure.
FIG. 2 illustrates a first structural diagram of a substrate layer in a luminescent display glass of the present disclosure.
FIG. 3 illustrates a schematic diagram of a width of a light shielding portion in a luminescent display glass of the present disclosure.
FIG. 4 illustrates a schematic diagram of a width configuration of a light shielding portion in a luminescent display glass of the present disclosure.
FIG. 5 illustrates a second structural diagram of a substrate layer in a luminescent display glass of the present disclosure.
FIG. 6 illustrates a second cross-sectional view of a luminescent display glass of the present disclosure.
FIG. 7 illustrates a third cross-sectional view of a luminescent display glass of the present disclosure.
FIG. 8 illustrates a third structural diagram of a substrate layer in a luminescent display glass of the present disclosure.
FIG. 9 illustrates a fourth structural diagram of a substrate layer in a luminescent display glass of the present disclosure.

### DETAILED DESCRIPTION OF THE EMBODIMENTS

For a clearer understanding of the technical features, objectives and effects of the present disclosure, specific embodiments of the present disclosure will now be described with reference to the drawings.

### Embodiment 1

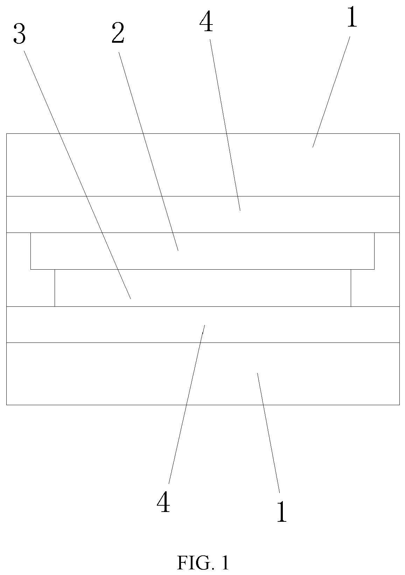

As illustrated in FIG. 1, the present disclosure provides a luminescent display glass, which includes a glass layer 1, a substrate layer 2 and a luminescent display layer 3 which are arranged in a stacked manner. At least part of the substrate layer 2 is located at a position of junction between the luminescent display layer 3 and the glass layer 1, so as to make a transition between a display effect of the luminescent display layer 3 and a display effect of the glass layer 1, and eliminate a visual difference between the luminescent display layer 3 and the glass layer 1 at the position of junction.

In the present disclosure, the glass layer 1, the substrate layer 2 and the luminescent display layer 3 are arranged in a stacked manner. Since at least part of the substrate layer 2 is located at the position of junction between the luminescent display layer 3 and the glass layer 1, the substrate layer 2 can transition the display effect of the luminescent display layer 3 and the display effect of the glass layer 1, so that the luminescent display layer 3 and the glass layer 1 can be visually transitionally integrated (i.e., the substrate layer 2 can adjust factors such as light transmittance, color, or gradient transmittance to create a natural transition between the luminescent display layer 3 and the glass layer 1), thereby effectively eliminating the visual difference between the luminescent display layer 3 and the glass layer 1 at the position of junction, and improving the compatibility between the luminescent display layer 3 and the glass layer 1. While achieving superior display performance, the arrangement of the substrate layer 2 provides a larger design space for the luminescent display content and bring a better aesthetic impression to users.

In an optional embodiment of the present disclosure, as illustrated in FIG. 1, there are at least two glass layers 1 (i.e., an inner sheet glass and an outer sheet glass in the conventional vehicle glass), between which the substrate layer 2 and the luminescent display layer 3 are stacked and interposed. The two glass layers 1 are stacked with both the substrate layer 2 and the luminescent display layer 3. The glass layer 1 may be conventional vehicle glass.

Further, as illustrated in FIG. 1, an adhesive interlayer 4 is disposed between the glass layer 1 and the substrate layer 2, and/or between the glass layer 1 and the luminescent display layer 3. The adhesive interlayer may be, for example, polyvinyl butyral (PVB), ethylene vinyl acetate, polyurethane, polypropylene, polyacrylate, polyethylene, polycarbonate, polymethylmethacrylate, polyvinyl chloride, polyacrylate resin, casting resin, acrylate, fluorinated ethylene propylene, polyvinyl fluoride, and/or ethylene tetrafluoroethylene, and/or their mixtures and/or copolymers. The adhesive interlayer 4 serves to bond the adjacent glass layer 1 and substrate layer 2 or bond the adjacent glass layer 1 and luminescent display layer 3 to ensure a stable connection between two adjacent layers.

In an optional embodiment of the present disclosure, as illustrated in FIG. 1, the substrate layer 2 may be stacked between the glass layer 1 and the luminescent display layer 3. Alternatively, the substrate layer 2 may be stacked solely on a surface of the glass layer 1, as long as the substrate layer 2 can make a transitional integration between the display effect of the luminescent display layer 3 and the display effect of the glass layer 1. Alternatively, other stacking configurations with equivalent effects may be adopted among the glass layer 1, the substrate layer 2 and the luminescent display layer 3, and are not limited here.

Further, the substrate layer 2 may be a single-layer structure, or a multi-layered structure with a plurality of stacked layers (e.g., a first substrate layer, a second substrate layer, and a third substrate layer to a nth substrate layer are stacked). The specific number of layers of the substrate layer 2 is not limited here.

Further, the luminescent display layer 3 may be a single-layered luminescent display device or a multi-layered luminescent display device. The luminescent display device may be a liquid crystal display (LCD), an organic light-emitting diode display (OLED), an inorganic light-emitting diode display (LED) or any other display device capable of displaying patterns or characters. The luminescent display device may be opaque, semi-transparent, or transparent, with a visible light transmittance of 90% to 0%. The luminescent display device may be single-side displayable or dual-side displayable. The dual-side displayable luminescent display device can display characters, numbers and/or patterns to the inside and the outside of a vehicle simultaneously.

In an optional embodiment of the present disclosure, a projection area of the substrate layer 2 on the glass layer 1 is greater than a projection area of the luminescent display layer 3 on the glass layer 1, and a projection of the substrate layer 2 on the glass layer 1 completely overlaps a projection of the luminescent display layer 3 on the glass layer 1. This ensures that a transitional integration can be carried out through the substrate layer 2 at any position of junction between the luminescent display layer 3 and the glass layer 1, thereby eliminating a visual difference between the luminescent display layer 3 and the glass layer 1 at the position of junction.

Further, an area of the substrate layer 2 is greater than an area of the luminescent display layer 3, and the area of the substrate layer 2 is less than or equal to an area of the glass layer 1.

In an optional embodiment of the present disclosure, the substrate layer 2 may be made of a material with a fixed optical characteristic, or may be a device with an adjustable optical characteristic. For example, based on external environmental needs, the substrate layer 2 may be a device with an adjustable visible light transmittance or an adjustable color change or any other adjustable optical characteristic or a plurality of adjustable optical characteristics. Examples include a conventional PDLC device which can adjust the visible light transmittance and the haze through voltage, or an EC device which can adjust the visible light transmittance and the color change through voltage or current.

Further, the substrate layer 2 may be made of one selected from the group consisting of plastic, resin, plant fiber, skin, leather, metal, and glass, or may be made of a composite material composed of several of the above materials. The thickness of the substrate layer 2 is less than or equal to 4 mm, and exemplarily less than or equal to 0.76 mm. Further, an optimum thickness of the substrate layer 2 is less than or equal to 0.1 mm.

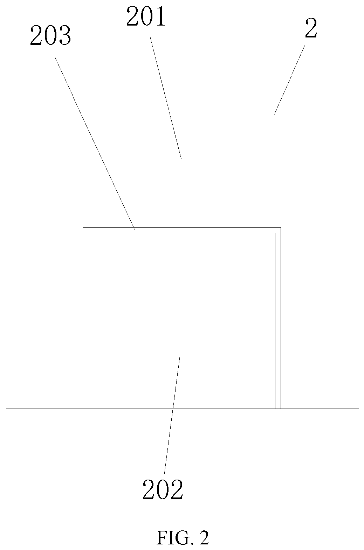

In an optional embodiment of the present disclosure, as illustrated in FIG. 2, the substrate layer 2 includes a display area 202 and a substrate area 201, and a light shielding portion 203 is disposed on a periphery of the display area 202 and located between the substrate area 201 and the display area 202. The light shielding portion 203 serves to prevent light transmitted through the glass layer 1 (i.e., external light that can enter the vehicle through the glass layer 1, which is typically brighter than the interior light and could adversely affect the display performance of the luminescent display layer 3 and the display area 202) from entering the display area 202, thereby ensuring superior display performance.

Further, the display area 202 is disposed within the substrate layer 2, and the light shielding portion 203 is disposed around the periphery of the display area 202.

Further, as illustrated in FIG. 2, a projection area of the display area 202 on the glass layer 1 is less than a projection area of the luminescent display layer 3 on the glass layer 1. Alternatively, the projection area of the display area 202 on the glass layer 1 may be equal to the projection area of the luminescent display layer 3 on the glass layer 1, and at least part of the luminescent display layer 3 overlaps with the display area 202, so that the light emitted by the luminescent display layer 3 can penetrate through the display area 202 and the glass layer 1 for outward emission.

Further, the display area 202 may be made of, but not limited to, a transparent and colorless material. Alternatively, the display area 202 may be made of a material of any other color, as long as the arrangement of the display area 202 does not affect the display effect of the luminescent display layer 3.

Further, the light shielding portion 203 may be, but not limited to, black in color, with a visible light transmittance of less than 1%. The light shielding portion can shield the light transmitted from the backside of the glass, thereby significantly reducing interference from ambient background light (i.e., the light outside the vehicle) on the light emitted by the luminescent display layer 3, and achieving improved display performance.

Further, the substrate area 201 may be transparent, semi-transparent, opaque, black, colorless or of any other color, or a specific pattern composed of the above colors.

In an optional embodiment of the present disclosure, a projection width of the light shielding portion 203 on the glass layer 1 is greater than or equal to 10 times a line width resolvable by the human eye, and less than or equal to 0.1 times a width of the display area 202 in the same direction.

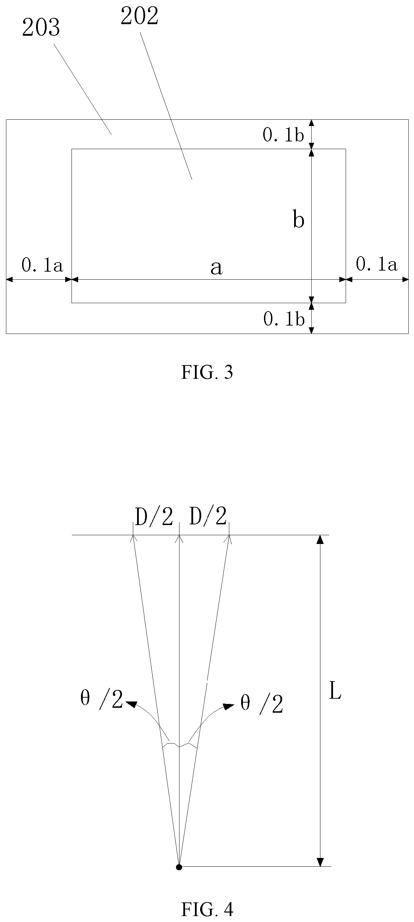

Specifically, as illustrated in FIG. 3, if the width of the display area 202 in a horizontal direction (i.e., a left-right direction of a principal plane) is a, the width of the light shielding portion 203 located on each of the left and right sides of the display area 202 in the horizontal direction is 0.1a. If the width of the display area 202 in a vertical direction (i.e., an up-down direction of a principal plane) is b, the width of the light shielding portion 203 located on each of the upper and lower sides of the display area 202 in the vertical direction is 0.1b.

In this embodiment, the line width resolvable by the human eye (i.e., a minimum resolvable line width) may be 0.22 mm. As illustrated in FIG. 4, since the minimum resolution angle θ of the human eye is 1.5°, assuming that the distance L between the observation point (i.e., the human eye) and the display area 202 is 500 mm, the line width D resolvable by the human eye is calculated as: D=2tan(θ/2) L=0.22 mm. To distinguish the light shielding portion 203 from the display area 202 and prevent the observer from perceiving the light shielding portion 203 as a part of the display areas 202 in a display state, the minimum width of the light shielding portion 203 is 2.2 mm. While a greater width of the light shielding portion 203 provides better differentiation between background light and display light, it also degrades the aesthetic appearance. Therefore, it is appropriate to set the projection width of the light shielding portion 203 on the glass layer 1 to be less than 0.1 times the width of the display area 202 in the same direction.

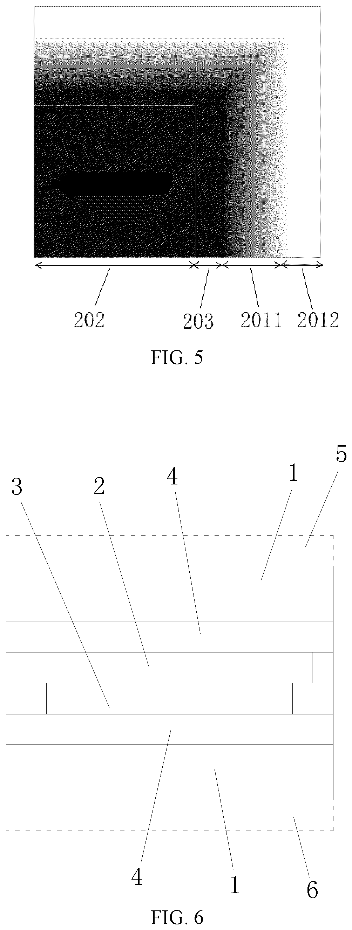

In an optional embodiment of the present disclosure, as illustrated in FIG. 5, the substrate area includes a transition portion 2011 and a transparent portion 2012 that are sequentially arranged in a direction away from the display area 202. The transition portion 2011 and the transparent portion 2012 may both be stacked within the glass layer 1. Alternatively, an edge of the transparent portion 2012 may overlap with an edge of the glass layer 1. By disposing the transition portion 2011 and the light shielding portion 203, the transition between the display area 202 and the transparent portion 2012 in the substrate area 201 is more natural. In the display state, the area with the light shielding function (i.e., a light shielding area) may merely be the light shielding portion 203. Since the transition portion 2011 serves as a transition area between the transparent portion 2012 and the light shielding portion 203, it also has a certain light shielding effect, thus the area with the light shielding function may also include both the light shielding portion 203 and the transition portion 2011. Alternatively, the area with the light shielding function may merely be the transition portion 2011. The area with the light shielding function may be determined according to the structure of the substrate layer 2, as long as it can prevent the light transmitted through the glass layer 1 from entering the display area 202.

The specific data of each area in the substrate layer 2 is shown in Table 1 below.

**Table 1**

| No. | Name | | Width | Light transmittance | Description of characteristics |
|---|---|---|---|---|---|
| 1 | Display area 202 | | 280 mm | 0% | Stacked with the luminescent display layer 3 |
| 2 | Substrate area 201 | Light shielding portion 203 | 4 mm | 0% | Shielding external light, and it is advantageous to distinguish the light from the luminescent display layer 3 and the light outside the vehicle |
| 3 | | Transition portion 2011 | 45 mm | Gradually varied from 0 to 95% | Transition between the transparent portion 2012 and the light shielding portion 203 |
| 4 | | Transparent portion 2012 | 62 mm | Greater than 95% | Achieving the same light transmission effect as the glass layer 1 |

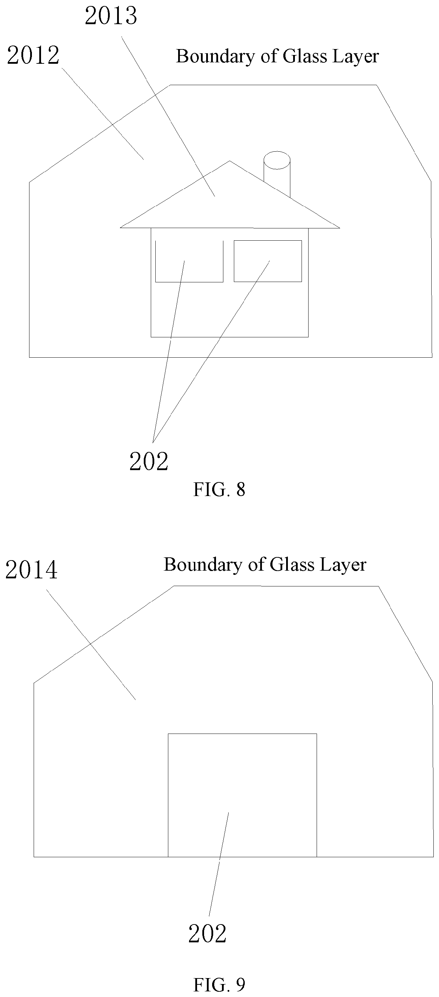

In an optional embodiment of the present disclosure, as illustrated in FIG. 8, a pattern display portion 2013 is formed in the substrate area 201, and located within the transparent portion 2012 or occupies a position where the transparent portion 2012 is located. The display area 202 is located in the pattern display portion 2013, so that a pre-designed specific pattern (e.g., a house pattern in FIG. 8) can be displayed through the pattern display portion 2013, thereby improving the display aesthetics. The specific data of each area in the substrate layer 2 is shown in Table 2 below.

**Table 2**

| No. | Name | Light transmittance | Description of characteristics |
|---|---|---|---|
| 1 | Display area 202 | Less than 10% | Stacked with the luminescent display layer 3 |
| 2 | Pattern display portion 2013 | 10% to 90% | A combination of patterns with different light transmittances and colors are provided, such as a house model, so that the pattern display portion 2013 has better uniformity and aesthetics with other areas |
| 3 | Transparent portion 2012 | greater than 90% | Achieving the same light transmission effect as the glass layer 1 |

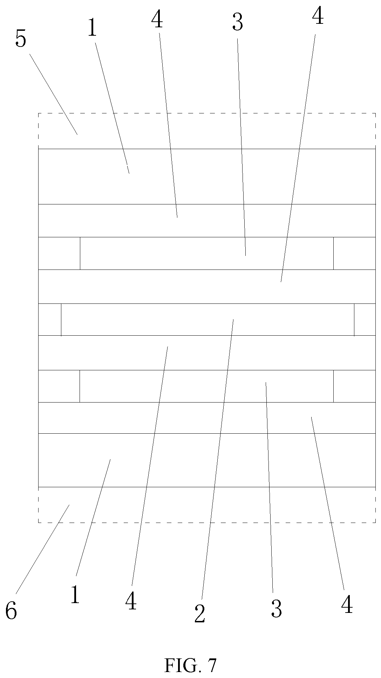

Further, as illustrated in FIGS. 6 to 8, there are a plurality of pattern display portions 2013, each of which is located at both sides of the luminescent display layer 3, so as to perform in-vehicle displaying and out-of-vehicle displaying through an in-vehicle display surface 5 and an out-of-vehicle display surface 6, respectively.

Further, the luminescent display layer 3 is configured for single-sided display or dual-sided display. When the luminescent display layer 3 is configured for single-sided display, there is one luminescent display layers 3, which is disposed close to the in-vehicle display surface 5, and the substrate layer 2 is disposed close to the out-of-vehicle display surface 6, so that in-vehicle displaying can be performed through the in-vehicle display surface 5. When the luminescent display layers 3 is configured for dual-sided display, there are two luminescent display layers 3, which are located on two sides of the substrate layer 2, respectively, so that in-vehicle displaying and out-of-vehicle displaying can be performed through the in-vehicle display surface 5 and the out-of-vehicle display surface 6, respectively.

In an optional embodiment of the present disclosure, as illustrated in FIG. 9, a dimmable portion 2014 is formed in the substrate area 201, and located within the transparent portion 2012 or occupies a position where the transparent portion 2012 is located. The display area 202 is located within the dimmable portion 2014, so that a visible light transmittance can be adjusted by the dimmable portion 2014. The dimmable portion 2014 has a dimming function. When being applied with specified voltage and/or current, the dimmable portion 2014 can adjust and have a corresponding visible light transmittance. By configuring different transmittance combinations of the display area 202 and the dimmable portion 2014, multiple patterns can be displayed, making it suitable for various application scenarios. The specific data of each area in the substrate layer 2 is shown Table 3 below.

**Table 3**

| Mode | Name | Light transmittance /state | Description of characteristics |
|---|---|---|---|
| General mode | Luminescent display layer 3 | 60% | A transparent display device with a certain light transmittance |
| | Display area 202 | 1% to 90% adjustable | Adjust as needed |
| | Transparent portion 2012 | 1% to 90% adjustable | Adjust as needed |
| Private mode | Luminescent display layer 3 | On/Off | All-black privacy mode: used as a general privacy glass when the luminescent display |
| | Display area 202 | 1% | layer 3 does not work (i.e., in an off position); and when the luminescent display layer 3 works (i.e., in an on position), the dimmable portion 2014 can resist the interference of light outside the vehicle to the luminescent display layer 3, and achieve a better display effect |
| | Dimmable portion 2014 | 1% | |
| Ordinary glass mode | Luminescent display layer 3 | 60%/Off | When the luminescent display layer 3 does not work (i.e., in an off position), the light transmittance of the display area 202 is 90%, and the light transmittance of this area is 54% after being superimposed with the light transmittance of 60% of the luminescent display layer 3 itself. Therefore, the light transmittance of the dimmable portion 2014 is set as 54%, and the use effect is consistent with that of the ordinary glass |
| | Display area 202 | 90% | |
| | Dimmable portion 2014 | 54% | |
| Augmen ted Reality (AR) Interacti ve Display Mode | Luminescent display layer 3 | 50% to 80%/On | When the luminescent display layer 3 works, the light transmittance of the display functional area is 50% to 80% (preferably 60%), so that part of light can be shielded to improve the display effect, and the scenery outside the vehicle can be viewed through the substrate area 201; the luminescent display layer 3 can display corresponding information according to the scenery outside the vehicle (e.g., scenic spot information, ticket reservation, food purchase, etc.) to enhance the reality display function |

The characteristics and advantages of the luminescent display glass of the present disclosure are at least as follows.
1. In the luminescent display glass, the substrate layer 2 is added on the basis of the luminescent display layer 3 and the glass layer 1. The substrate layer 2 is stacked with the luminescent display layer 3 and the glass layer 1, and at least part of the substrate layer 2 is located at a position of junction between the luminescent display layer 3 and the glass layer 1. The display effect of the luminescent display layer 3 and the display effect of the glass layer 1 is transitioned through the substrate layer 2, so that the luminescent display layer 3 and the glass layer 1 can be visually transitionally integrated, thereby effectively eliminating the visual difference between the luminescent display layer 3 and the glass layer 1 at the position of junction, and improving the compatibility between the luminescent display layer 3 and the glass layer 1. In addition to achieving superior display performance, the substrate layer 2 can provide a larger design space for the luminescent display content and bring a better aesthetic impression to users.
2. In the luminescent display glass, there are fewer restrictions on the substrate area 201 in the substrate layer 2, thus granting designers more design freedom, and improving the aesthetic appearance of the glass display.

### Embodiment 2

The present disclosure provides a vehicle, which includes a vehicle body and the above-mentioned luminescent display glass. The luminescent display glass is disposed at a glass mounting position of the vehicle body.

The characteristics and advantages of the vehicle of the present disclosure are at least as follows.

In the vehicle, by disposing the luminescent display glass which incorporates the substrate layer 2, the display device and the vehicle glass (e.g., special-shaped glass) are better integrated, thereby enhancing display performance, providing superior aesthetic enjoyment, increasing an aesthetic value of the luminescent display glass, and being suitable for widespread application.

Those described above are merely illustrative specific embodiments of the present disclosure, and are not intended to limit the scope of the present disclosure. Any equivalent change or modification made by persons skilled in the art without departing from the concept and the principle of the present disclosure should fall within the protection scope of the present disclosure.

## Claims

1. A luminescent display glass, comprising a glass layer, a substrate layer and a luminescent display layer which are arranged in a stacked manner, wherein at least part of the substrate layer is located at a position of junction between the luminescent display layer and the glass layer, so as to make a transition between a display effect of the luminescent display layer and a display effect of the glass layer, and eliminate a visual difference between the luminescent display layer and the glass layer at the position of junction.

2. The luminescent display glass according to claim 1, wherein the luminescent display glass comprises at least two glass layers, between which the substrate layer and the luminescent display layer are stacked and interposed.

3. The luminescent display glass according to claim 1 or 2, wherein an adhesive interlayer is disposed between the glass layer and the substrate layer, and/or between the glass layer and the luminescent display layer.

4. The luminescent display glass according to claim 1 or 2, wherein the substrate layer is stacked on a surface of the glass layer.

5. The luminescent display glass according to claim 1, wherein a projection area of the substrate layer on the glass layer is greater than a projection area of the luminescent display layer on the glass layer, and a projection of the substrate layer on the glass layer completely overlaps a projection of the luminescent display layer on the glass layer.

6. The luminescent display glass according to claim 5, wherein an area of the substrate layer is greater than an area of the luminescent display layer, and the area of the substrate layer is less than or equal to an area of the glass layer.

7. The luminescent display glass according to claim 1, wherein the substrate layer comprises a display area, and a light shielding portion is disposed on a periphery of the display area to prevent light transmitted through the glass layer from entering the display area.

8. The luminescent display glass according to claim 7, wherein a projection area of the display area on the glass layer is less than or equal to a projection area of the luminescent display layer on the glass layer, and at least part of the luminescent display layer overlaps with the display area, so as to allow light emitted by the luminescent display layer to penetrate through the display area and the glass layer for emission.

9. The luminescent display glass according to claim 7, wherein the substrate layer further comprises a substrate area, and the light shielding portion is disposed between the substrate area and the display area.

10. The luminescent display glass according to claim 9, wherein the display area is disposed within the substrate layer, and the light shielding portion is disposed around the periphery of the display area.

11. The luminescent display glass according to claim 7 or 9, wherein the substrate area comprises a transition portion and a transparent portion that are sequentially arranged in a direction away from the display area.

12. The luminescent display glass according to claim 11, wherein an edge of the transparent portion overlaps with an edge of the glass layer.

13. The luminescent display glass according to claim 11, wherein a pattern display portion is formed in the substrate area, and located within the transparent portion or occupies a position where the transparent portion is located, and the display area is located within the pattern display portion, so as to display a pattern through the pattern display portion.

14. The luminescent display glass according to claim 13, wherein there are a plurality of pattern display portions, each of which is located at both sides of the luminescent display layer.

15. The luminescent display glass according to claim 11, wherein a dimmable portion is formed in the substrate area and located within the transparent portion or occupies a position where the transparent portion is located, and the display area is located within the dimmable portion, so as to adjust a visible light transmittance through the dimmable portion.

16. The luminescent display glass according to claim 9, wherein a projection width of the light shielding portion on the glass layer is greater than or equal to 10 times a line width resolvable by a human eye and less than or equal to 0.1 times a width of the display area in the same direction.

17. The luminescent display glass according to claim 1, wherein the luminescent display glass comprises one luminescent display layer, and the luminescent display layer and the substrate layer are respectively located close to an in-vehicle display surface and an out-of-vehicle display surface, so as to enable in-vehicle display through the in-vehicle display surface; or
the luminescent display glass comprises two luminescent display layers, which are located on two sides of the substrate layer, respectively, so as to in-vehicle display and out-of-vehicle display through the in-vehicle display surface and the out-of-vehicle display surface, respectively.

18. The luminescent display glass according to claim 1, wherein the substrate layer is a single-layer structure, or a multi-layered structure with a plurality of stacked layers.

19. A vehicle, comprising a vehicle body and the luminescent display glass according to any one of claims 1 to 18, wherein the luminescent display glass is disposed on the vehicle body.
